# EUROPÄISCHE PATENTSCHRIFT

(11) **EP 0 752 071 B1**
(45) Veröffentlichungstag und Bekanntmachung des Hinweises auf die Patenterteilung: **20.10.1999**
(21) Anmeldenummer: 95913056.8
(22) Anmeldetag: 23.03.1995
(51) Int. Cl.: F16C 9/02, F16C 9/03, F16C 9/04

(54) **LAGERSCHALE UND EIN IN EINEM MIT LAGERDECKEL VERSEHENEN LAGERKÖRPER EINGEBAUTES RADIAL-GLEITLAGER**
BEARING SHELL AND A RADIAL SLIDING BEARING INCORPORATED IN A BEARING BODY PROVIDED WITH A CAP PIECE
COUSSINET DE PALIER ET PALIER LISSE RADIAL MONTE DANS UN CORPS DE PALIER MUNI D'UN CHAPEAU DE PALIER

(30) Priorität: 25.03.1994 DE 4410390
(43) Veröffentlichungstag der Anmeldung: 08.01.1997
(73) Patentinhaber: Federal-Mogul Wiesbaden GmbH, 65201 Wiesbaden (DE)
(72) Erfinder: NIEGEL, Fritz, D-65375 Oestrich-Winkel (DE); WEILAND, Hjalmar, D-65375 Oestrich-Winkel (DE)
(86) Internationale Anmeldenummer: DE9500414
(87) Internationale Veröffentlichungsnummer: WO9527857

(56) Entgegenhaltungen:
- DE-A- 3 136 199
- FR-A- 1 153 939
- US-A- 1 717 873
- US-A- 3 249 391

## Beschreibung

Die Erfindung betrifft eine Lagerschale gemäß dem Oberbegriff von Anspruch 1. Die Erfindung betrifft auch ein in einem mit einem Lagerdeckel versehenen Lagerkörper eingebautes Radialgleitlager mit Lagerober- und Lagerunterschale für Lagerungen in Verbrennungskraftmaschinen, insbesondere zur Lagerung von Kurbelwellen in Kurbelgehäusen und Pleueln, bei denen in Größe und Richtung in einem bestimmten Zyklus wechselnde Lagerbelastungen auftreten, wobei die Wanddicke der Lagerunterschale vom Scheitelpunkt des Umfangs zu den Trennflächen hin zunimmt und die Innenkontur die Form eines Kreisbogens mit dem Radius rᵢ aufweist.

Derartige Radialgleitlager werden beispielsweise in Kfz-Motoren eingesetzt, wobei man Bund-, Haupt- und Pleuellager unterscheidet. Die Lageroberschale ist diejenige Lagerschale, die im Kurbelgehäuse bzw. in der Pleuelstange angeordnet ist, während die Unterschale im Gehäusedeckel eingebaut und mit dem Oberteil verschraubt ist. Bei derartigen Lagern werden Laufzeiten angestrebt, die der Lebensdauer des Kfz-Motors entsprechen. Bei Lkw-Motoren mit Laufleistungen von mehreren 100 000 km müssen die Lager oft vorzeitig ausgetauscht werden.

Man hat daher versucht, über die Geometrie der Lager eine verbesserte Schmierung und damit höhere Laufleistungen zu erzielen.

Aus der DE-A-14 25 125 sind Mehrschalenlager bekannt, bei denen sich die Wanddicke jeder Schale über die Lauflänge ändert, wobei der jeweilige Mittelpunkt des Schaleninnendurchmessers exzentrisch zum Mittelpunkt des Außendurchmessers der Schale verlagert ist und der Mittelpunkt für den Schaleninnendurchmesser auf der Winkelhalbierenden des Schalenumfangswinkels liegt. Bei derartigen Lagern, die auch lediglich aus zwei Lagerschalen bestehen können, besitzt die Lagerfläche keinen kreisförmigen Querschnitt, weil die Schaleninnendurchmesser in allen Fällen keinen gemeinsamen Mittelpunkt aufweisen. Jeder Lagerschale ist somit ein eigener Krümmungsradius zugeordnet, was zu Wanddickensprüngen an den Trennflächen führt. Wenn die Wanddicken im Bereich der Teilungsflächen gleich dick sind, dann weisen beide Schalen des Mehrschalenlagers ihre maximale Wanddicke im Scheitelbereich auf. Man erhält dann eine Art Zitronenbohrung.

Ein ähnliches Lager, bei dem die Mittelpunkte im gleichen Abstand beiderseits der Teilungsebene in einer radialen Ebene liegen, die um einen Winkel aus der Ebene der Hauptbelastung herausgedreht ist, ist aus der DE-B-16 75 743 bekannt.

Aus der DE-A-31 36 199 ist es bekannt, den eine größere Verformungssteifigkeit aufweisenden Abschnitt der Lagerung mit einer kreiszylinderförmigen und den eine kleine Verformungssteifigkeit aufweisenden Abschnitt der Lagerung mit einer ovalen Lagerschalenhälfte zu belegen. Die kreiszylinderförmige Lagerschale hat konstante Wanddicke, während die Wanddicke der ovalen Lagerschale zu den Teilflächen hin abnimmt, so daß im Bereich der Teilflächen ein Wanddickensprung auftritt.

Die US-A-4,311,349 beschreibt einen Lagersatz mit zwei identischen Lagerschalen, deren Wanddicken im Bereich der Teilflächen verringert sind, so daß ebenfalls eine Art Zitronenbohrung ausgebildet wird.

Aus der US-A-4,307,921 ist ein Lager bekannt, bei dem die Wanddicke der Schalen im Bereich der einen Teilfläche größer ist als im Bereich der anderen Teilfläche. Die Innenkontur der Lagerschalen wird durch zwei überlagerte Lagerbohrungen mit versetzten Mittelpunkten gebildet.

Die US-A-4,488,826 beschreibt eine exzentrische Lagerbohrung, bei der der exzentrisch angeordnete Wellenzapfen an einer Seite ein geringes und auf der anderen Seite ein großes Spiel aufweist. Der Mittelpunkt der exzentrischen Lagerbohrung ist in den Bereich geringer Belastung verschoben, so daß das dort vorhandene größere Spiel für die Schmierölzufuhr genutzt werden kann. Die beiden Lagerschalen, die identisch sind, weisen im Bereich der einen Teilfläche eine große Wanddicke auf, die sich in Umfangsrichtung der Schale kontinuierlich verringert, so daß sie im Bereich der anderen Teilfläche minimal wird. Da ein großes Spiel im Bereich geringer Belastung vorgesehen sein soll, liegt die Teilflächenebene nicht senkrecht zur Längsachse der Pleuelstange, was wiederum eine schräg geteilte Pleuelstange erforderlich macht.

Aus der DE-C-698002 ist ein geteiltes Gleitlager bekannt, bei dem die Lageroberschale größer ist als die Lagerunterschale, so daß die beiden sich verjüngenden gegenüber dem Lagerkörper vorstehenden Enden der Lageroberschale eine gute Zentrierung bilden. Damit im Bereich der größten Belastung die entsprechende Lagerschale stärker ausgebildet werden kann, ist der gemeinsame Innendurchmesser beider Lagerschalen zum unverändert gebliebenen gemeinsamen Außendurchmesser der beiden Lagerschalen exzentrisch zum Lagerdeckel verschoben worden, so daß die Lagerunterschale im Bereich des Scheitels eine geringere Wanddicke aufweist als im Bereich ihrer Teilfäche.

Es hat sich herausgestellt, daß mit diesen bekannten Lagern keine deutliche Steigerung der Lebensdauer erzielt werden konnte.

Aufgabe der Erfindung ist es, Lagerschalen sowie ein Radialgleitlager bereitzustellen, das sich durch eine so lange Lebensdauer auszeichnet, daß ein Austausch während der Lebensdauer der Verbrennungskraftmaschine möglichst nicht erforderlich wird.

Diese Aufgabe wird mit einer Lagerschale gemäß den Merkmalen von Patentanspruch 1 gelöst. Gegenstand eines eingebauten Radialgleitlagers ist der Patentanspruch 4.

Die Lageraufnahmebohrungen werden bei Kurbelgehäusen und Pleuelstangen in der Weise eingebracht, daß der Mittelpunkt der Lageraufnahmebohrung gleich dem Mittelpunkt des Wellenzapfens der Kurbelwelle ist, wobei zwischen Wellenzapfen und der jeweiligen Lagerschale ein bestimmtes Spiel vorgesehen ist. Nach dem Einbringen der Lageraufnahmebohrung werden die Deckel abgeschraubt, die Lagerschalen eingesetzt und die Deckel wieder aufgeschraubt, was mit einer festgelegten Anziehvorschrift durchgeführt wird.

Der Erfindung liegt nun die Erkenntnis zugrunde, daß der Deckel nach dem erstmaligen Abnehmen und Wiederfestschrauben einer Maßveränderung unterliegt, während der Bereich der Lagerbohrung im Gehäuseteil weitgehend unverändert bleibt. Es wurde festgestellt, daß diese Maßveränderungen auf den Scheitelbereich des Deckels beschränkt sind und von der Form und der Art des Materials des Deckels abhängen. Diese Maßveränderungen betragen bis zu 0.1mm. Die Maßveränderung, die nachfolgend als Deckeleinfall bezeichnet wird, führt zur Verringerung des Spiels zwischen der Lagerunterschale und der Kurbelwelle, was insgesamt zu einer höheren Belastung der Lagerunterschale und somit zu einem erhöhten Verschleiß führt, der letztendlich die Ursache für den vorzeitigen Ausfall des Lagers ist.

Dieser Deckeleinfall wird erfindungsgemäß durch speziell gestaltete Lagerschalen berücksichtigt. Es ist daher vorgesehen, daß die Innenkontur der Lagerschale, die in den Deckel eingebaut wird, die Form einer halben Ellipse mit den Halbachsen aᵢ und bᵢ aufweist, wobei die lange Halbachse aᵢ durch den Scheitelpunkt der Lagerschale verläuft.

Da Lagerschalen aus Stützmaterial und Lagermaterial aufgebaut sind, wird die Geometrie der Lagerschale vorzugsweise dadurch ausgebildet, daß das Stützmaterial der Lagerschale über den Umfang eine konstante Dicke und das auf dem Stützmaterial aufgebrachte Lagermaterial unterschiedliche Dicken aufweist. Bei Lageraußendurchmessern von 20 mm - 1000 mm beträgt der Unterschied in den Wanddicken im Scheitelpunkt und im Bereich der Trennflächen vorzugsweise bis zu 0,1 mm. Da der Deckeleinfall vom jeweiligen Material und der Form des Deckels abhängt, muß der Wanddickenunterschied auf diese Deckeleigenschaften abgestimmt werden. Zu diesem Zweck muß beispielsweise bei jedem Motorentyp der jeweilige Deckeleinfall zuvor bestimmt werden.

Wenn eine solche Lagerschale als Lagerunterschale zusammen mit einer Lageroberschale zur Ausbildung eines Radialgleitlagers in ein Kurbelgehäuse eingebaut wird, so wird sie aufgrund des Deckeleinfalls in der Weise geringfügig verformt, daß die zuvor ellipsenförmige Innenkontur in eine kreisbogenförmige übergeht, wobei gleichzeitig die Außenkontur von einer kreisbogenförmigen Gestalt in eine Ellipsenform übergeht. Die Außenkontur der Lagerunterschale nimmt hierbei die Gestalt einer liegenden Ellipse an, d.h. die kurze Halbachse bₐ geht durch den Scheitelpunkt der Lagerunterschale und die lange Halbachse aₐ liegt in der Teilflächenebene.

Die Innenkonturen von Lagerober - und Lagerunterschale liegen auf einem gemeinsamen Kreis, der dem Kreis entspricht, den man bei zwei identischen Lagerschalen und ohne Deckeleinfall erhalten würde. Das zwischen Lagerschale und Wellenzapfen erforderliche Spiel bleibt trotz Deckeleinfalls aufgrund der diesen Deckeleinfall berücksichtigenden Geometrie der Lagerunterschale vollständig erhalten, so daß kein zusätzlicher Verschleiß aufgrund des Deckeleinfalls auftreten kann.

Die Lagerunterschale ist vorzugsweise so ausgebildet, daß der Mittelpunkt des Außendurchmessers der Lageroberschale und der Mittelpunkt des Innendurchmessers der Lagerunterschale zusammenfällt.

Die Lageroberschale kann über den Umfäng eine konstante Wanddicke aufweisen. Es ist auch möglich, daß der Lagerbohrung eine sogenannte Zitronenbohrung überlagert ist, so daß auch die Lageroberschale im Scheitelpunkt eine geringere Wanddicke aufweist, als im Bereich der Trennflächen.

Das gleiche gilt auch für Pleueldeckel, die auf Pleuelstangen aufgeschraubt sind. In allen Fällen sind die Lagerschalen vorzugsweise so einzubauen, daß die Trennflächen der Lagerschalen in der Trennebene des Deckels liegen.

Vorzugsweise ist die Lagerwanddicke im Bereich der Trennflächen von Lagerober- und Lagerunterschale gleich groß, damit kein Wanddickensprung im Bereich der Trennflächen auftritt.

Mit den erfindungsgemäßen Radial-Gleitlagern konnten in damit ausgerüsteten Motoren erhebliche Steigerungen der Laufleistungen ohne Probleme erreicht werden.

Vorteilhafte Ausgestaltungen werden nachfolgend anhand der Zeichnungen näher erläutert.

Es zeigen:
- Figur 1: die Geometrie einer Lageraufnahmebohrung,
- Figur 2: Lagerober- und Lagerunterschale in Seitenansicht vor dem Einbau,
- Figur 3: die in Figur 2 gezeigten Lagerober- und Lagerunterschale in Seitenansicht im eingebauten Zustand,
- Figur 4: ein Pleuel in Vorderansicht und mit Wellenzapfen im Schnitt,
- Figur 5: ein Kurbelgehäuse in Vorderansicht und mit Wellenzapfen im Schnitt, und
- Figur 6: Lagerober- und Lagerunterschale mit Zitronenbohrung in Seitenansicht.

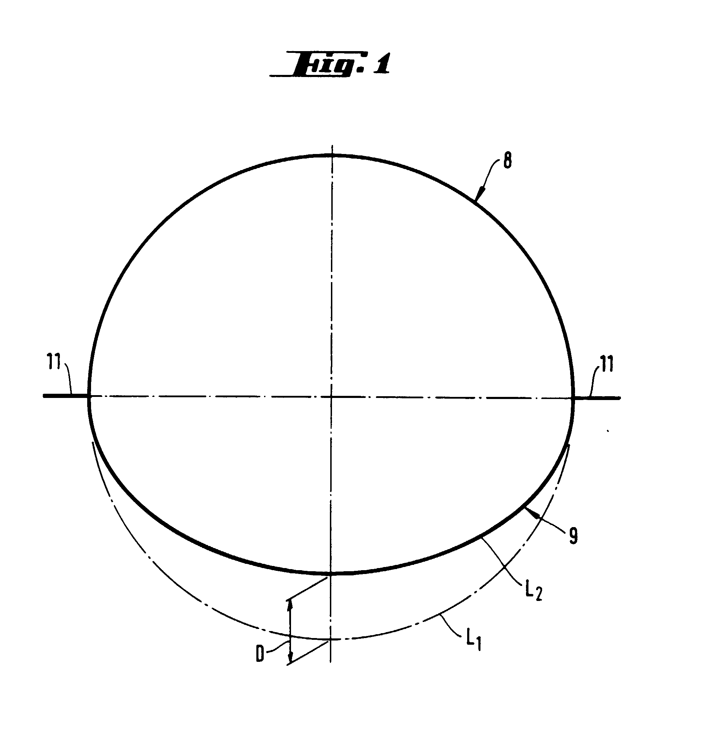

In der Figur 1 ist die Geometrie einer Lageraufnahmebohrung in einem Pleuel oder einem Gehäuse schematisch dargestellt, wobei L₁ die kreisförmige Lageraufnahmebohrung beschreibt, nachdem das Kurbelgehäuse oder die Pleuelstange vom Bohrwerk bearbeitet worden ist.

Wird der Deckel, der die untere Hälfte der Lageraufnahmebohrung bildet, abgeschraubt und anschließend nach dem Einbau der Lagerschalen wieder gemäß Anziehvorschrift befestigt, hat sich die Innenkontur aufgrund des Deckeleinfalls verändert. Nach dem Lagereinbau wird die Lageraufnahmebohrung durch die Kurve L₂ beschrieben, die die Gestalt einer liegenden Ellipse annimmt. Die Abnahme des Durchmessers der Lageraufnahmebohrung im Scheitelbereich ist durch den Deckeleinfall D bedingt.

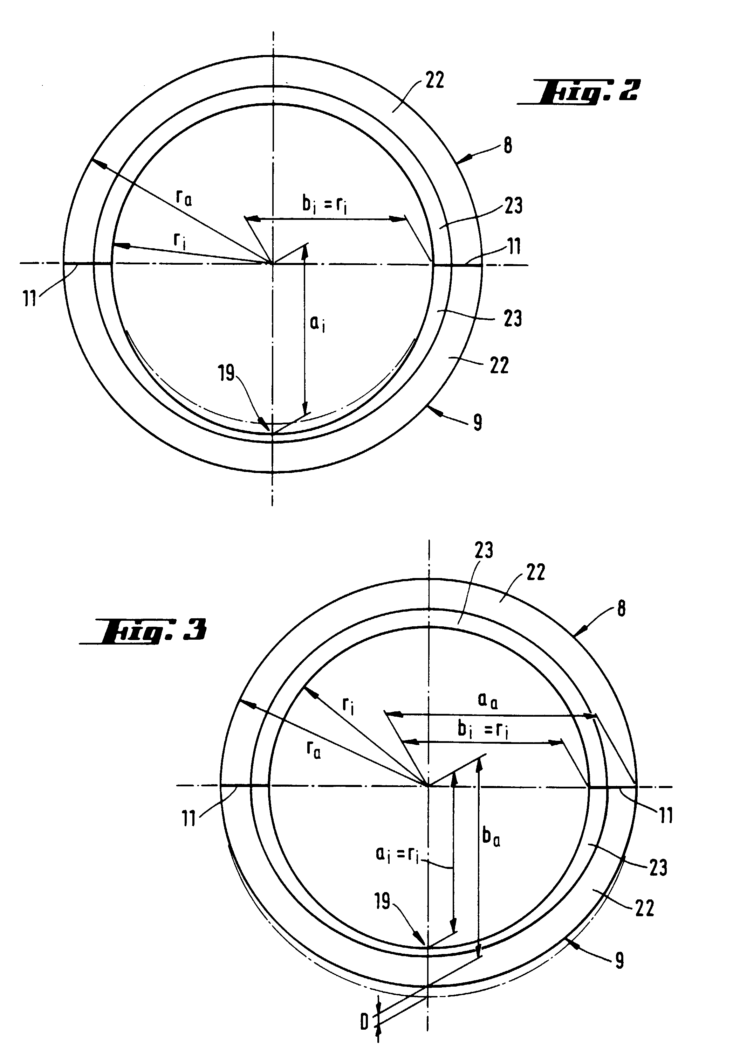

In der Figur 2 sind zwei ein Radialgleitlager bildende Lagerschalen 8, 9 im nicht-eingebauten Zustand dargestellt. Die Lageroberschale 8 sowie die Lagerunterschale 9 besitzen ein Stützmaterial 22, auf dem ein Lagermaterial 23 aufgebracht ist. Die Lageroberschale 8 besitzt über den Umfang eine konstante Wanddicke. Die Lagerunterschale 9 weist im Scheitelpunkt 19 eine geringere Wanddicke auf, als im Bereich der Trennflächen 11, wo die Wanddicke derjenigen der Lageroberschale 8 entspricht. Die Wanddickenabnahme im Bereich des Scheitels geht zu Lasten des Lagermaterials 23, so daß das Stützmaterial 22 über den Umfang eine konstante Dicke aufweist. Die Innenkontur der Lagerunterschale ist so ausgebildet, daß sie die Form einer stehenden halben Ellipse aufweist, das heißt, die lange Halbachse aᵢ geht durch den Scheitelpunkt 19 der Lagerunterschale, während die kurze Halbachse bᵢ in der Ebene der Trennflächen 11 liegt und gleich dem Radius rᵢ des Innendurchmessers der Lageroberschale 8 ist.

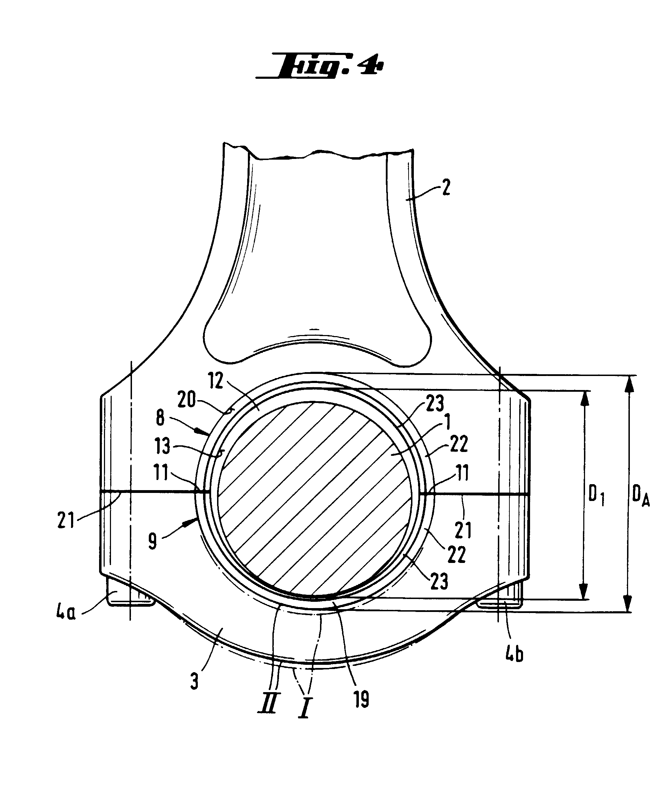

Wenn nun diese beiden Lagerschalen 8, 9 in ein Kurbelgehäuse eingebaut werden, so bleibt die Lageroberschale 8 in ihrer Gestalt unverändert, die Lagerunterschale 9 wird jedoch aufgrund des Deckeleinfalls geringfügig deformiert. Sowohl das Lagergehäuse als auch der Lagerdeckel sind in der Figur 3 nicht dargestellt. Der Deckeleinfall führt im Bereich des Scheitelpunktes 19 zu einer Verkürzung der langen Halbachse aᵢ bzw. des Radius des Außendurchmessers rₐ der Lagerunterschale 9. Diese Verkürzung führt dazu, daß die zuvor ellipsenförmige Innenkontur der Lagerunterschale nunmehr in eine kreisbogenförmige Innenkontur übergeht, mit der Folge, daß die lange Halbachse aᵢ den Wert des Radius rᵢ des Innendurchmessers der Lageroberschale 8 annimmt. Gleichzeitig geht aufgrund der unterschiedlichen Wanddicke der Lagerunterschale 9 die zuvor kreisbogenförmige Außenkontur der Lagerunterschale 9 in die Gestalt einer liegenden Ellipse über, deren kurze Halbachse bₐ durch den Scheitelpunkt 19 geht und deren lange Halbachse aₐ in der Ebene der Trennfläche 11 liegt und gleich dem Radius rₐ des Außendurchmessers der Lageroberschale 8 ist.

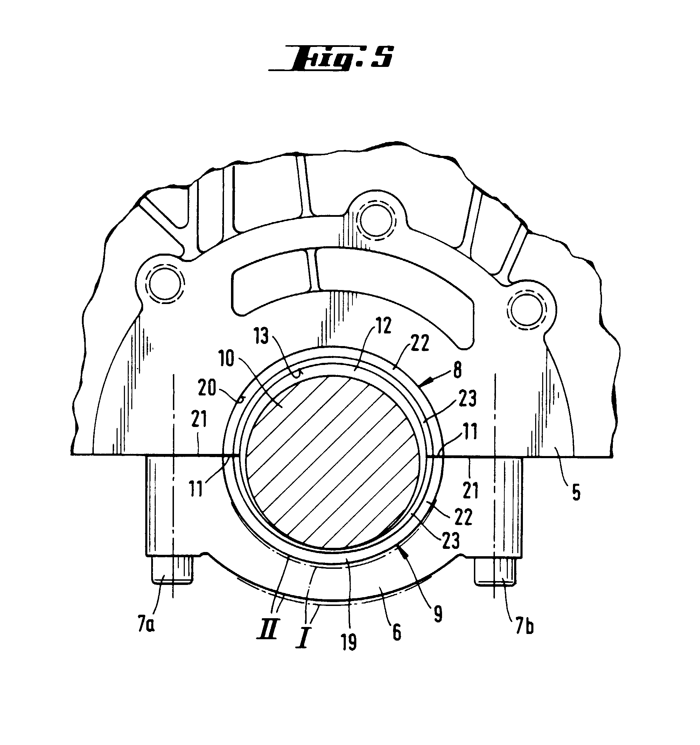

In der Figur 4 ist eine Pleuelstange 2 mit Pleueldeckel 3 dargestellt, der mittels der Pleuelschrauben 4a,b verschraubt ist. In der Lageraufnahmebohrung 20 sind die Lagerober- und die Lagerunterschale 8,9 so eingesetzt, daß die Teilflächen 11 in der Ebene 21 des Pleueldeckels 3 liegen. Die Außen- und Innenkontur des Deckels 3 nach dem Einbringen der Lageraufnahmebohrung 20 ist durch die gestrichelt eingezeichneten Kurven I dargestellt. Nach dem Lagereinbau hat sich der Deckel im Scheitelpunkt 19 verändert und die neue Innen- und Außenkontur des Deckels wird nunmehr durch die Kurven II beschrieben. Um den Deckeleinfall D (siehe Figur 1) auszugleichen, wurde die Wanddicke der Lagerunterschale 9 im Scheitelpunkt 19 entsprechend reduziert. Die Wanddicke der Lagerunterschale 9 nimmt kontinuierlich von den Trennflächen 11 bis zum Scheitelpunkt 19 ab.

Damit keine Wanddickensprünge auftreten, ist die Wanddicke der Lagerunterschale 9 im Bereich der Trennflächen 11 gleich der Wanddicke der Lageroberschale 8, die längs ihres Umfangs eine konstante Wanddicke aufweist.

Der Wellenzapfen 1, der seine Lage aufgrund der reduzierten Wanddicke der Lagerunterschale 9 nicht verändert hat, liegt nunmehr ohne Spiel auf der Lagerunterschale auf.

Das Lagerspiel 12 zwischen der Lageroberschale 8 und dem Wellenzapfen 1 konnte unverändert beibehalten werden. Aufgrund der verringerten Wanddicke der Lagerunterschale 9 hat sich der gemeinsame Außendurchmesser D_{A} beider Lagerschalen 8,9 um den Deckeleinfall D verringert, während der Durchmesser D₁ der Lagerbohrung 13 unverändert blieb.

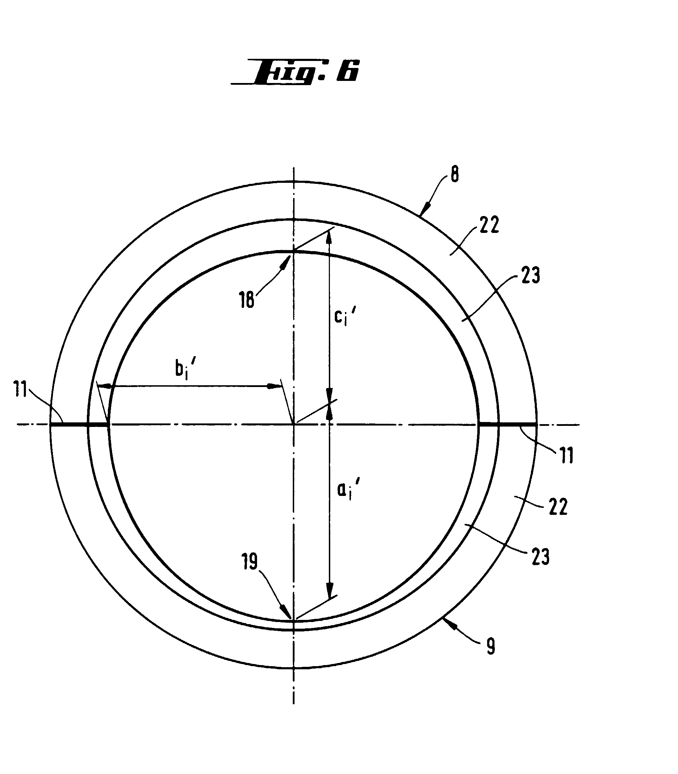

In der Figur 5 ist ein Kurbelgehäuse 5 mit einem Gehäusedeckel 6 dargestellt, der mittels der Deckelschrauben 7a, b befestigt ist. Auch bei dieser Ausführungsform wird die Gestalt des Deckels 6 vor und nach Einbau der Lagerschalen 8, 9 und des Zapfens 10 durch die Kurven I und II dargestellt. Die Ausgestaltung der Lagerschalen 8,9 entspricht derjenigen, die im Zusammenhang mit den Figuren 2 bis 4 beschrieben wurde.

In der Figur 6 sind zwei Lagerschalen 8, 9 im nicht eingebauten Zustand dargestellt. Diese Ausführungsform unterscheidet sich von der in Figur 2 gezeigten Ausführungsform dadurch, daß der Lagerbohrung mit der erfindungsgemäßen Lagergeometrie eine Zitronenbohrung überlagert ist. Die Geometrie der Lagerunterschale 9 ist gegenüber der in Figur 2 gezeigten nur geringfügig verändert. Die die Innenkontur der Lagerunterschale beschreibende Ellipse bleibt erhalten, wobei für die Halbachsen aᵢ' < aᵢ und bᵢ' > bᵢ mit aᵢ' > bᵢ' gilt. Die größte Veränderung erfährt hierbei die Lageroberschale 8, deren Wanddicke nunmehr im Scheitelpunkt 18 am größten ist und zu den Trennflächen 11 hin abnimmt. In der hier gezeigten Ausführungsform weist das Stützmaterial 22 konstante Dicken und das Lagermaterial unterschiedliche Dicken auf. Die Zitronenbohrung führt bei der Lageroberschale 8 für die Innenkontur zu einer liegenden Ellipse mit der langen Halbachse bᵢ' und einer kurzen Halbachse cᵢ'.

### Bezugszeichen:

- 1: Wellenzapfen
- 2: Pleuelstange
- 3: Pleueldeckel
- 4a, 4b: Pleuelschrauben
- 5: Gehäuse
- 6: Deckel
- 7a, b: Deckelschrauben
- 8: Lageroberschale
- 9: Lagerunterschale
- 10: Zapfen
- 11: Trennfläche
- 12: Einbauspiel
- 13: Lagerbohrung
- 18: Scheitelpunkt
- 19: Scheitelpunkt
- 20: Lageraufnahmebohrung
- 21: Ebene des Deckels
- 22: Stützmaterial
- 23: Lagermaterial

## Patentansprüche

1. Lagerschale, insbesondere Lagerunterschale für radiale Gleitlager in Verbrennungskraftmaschinen, deren Außenkontur die Form eines Kreisbogens mit dem Radius rₐ aufweist und deren Lagerwanddicke vom Scheitelpunkt in Umfangsrichtung zu den Trennflächen hin zunimmt, dadurch gekennzeichnet,
daß die Innenkontur die Form einer halben Ellipse mit den Halbachsen aᵢ und bᵢ aufweist, wobei die lange Halbachse aᵢ durch den Scheitelpunkt (19) der Lagerunterschale (9) verläuft.

2. Lagerschale nach Anspruch 1, dadurch gekennzeichnet, daß das Stützmaterial (22) der Lagerschale (9) über den Umfang eine konstante Dicke und das auf dem Stützmaterial (22) aufgebrachte Lagermaterial (23) unterschiedliche Dicken aufweist.

3. Lagerschale nach Anspruch 1 oder 2, dadurch gekennzeichnet, daß bei Lageraußendurchmessern von 20mm bis 1000mm der Unterschied in der Wanddicke im Scheitelpunkt (19) und im Bereich der Trennflächen (11) bis zu 0,1 mm beträgt.

4. Lageranordnung, bestehend aus einem in einem mit Lagerdeckel versehenen Lagerkörper eingebauten Radialgleitlager mit Lagerober- und Lagerunterschale für Lagerungen in Verbrennungskraftmaschinen, insbesondere zur Lagerung von Kurbelwellen, bei denen in Größe und Richtung in einem bestimmten Zyklus wechselnde Lagerbelastungen auftreten, wobei die Wanddicke der Lagerunterschale vom Scheitelpunkt längs des Umfangs zu den Trennflächen hin zunimmt und die Innenkontur der Lagerunterschale die Form eines Kreisbogens mit dem Radius rᵢ aufweist, dadurch gekennzeichnet,
daß die Außenkontur der Lagerunterschale (9) die Form einer halben Ellipse mit den Halbachsen aₐ und bₐ aufweist, wobei die kurze Halbachse bₐ durch den Scheitelpunkt (19) der Lagerunterschale (9) verläuft.

5. Lageranordnung nach Anspruch 4, dadurch gekennzeichnet, daß die Mittelpunkte des Außendurchmessers der Lageroberschale (8) und der Innenduchmesser der Lagerunterschale (9) zusammenfallen.

6. Lageranordnung nach einem der Ansprüche 4 oder 5, dadurch gekennzeichnet, daß die Lagerwanddicke im Bereich der Trennflächen (11) bei Lagerober- und Lagerunterschalen (8,9) gleich groß ist.

7. Lageranordnung nach einem der Ansprüche 4 bis 6, dadurch gekenzeichnet, daß der Lagerbohrung (13) eine Zitronenbohrung überlagert ist, so daß die Wanddicke im Scheitelpunkt (18) der Lageroberschale (8) dicker ist als im Bereich der Trennflächen (11).

8. Lageranordnung nach einem der Ansprüche 4 bis 7, dadurch gekennzeichnet, daß die Lagerschalen (8, 9) mit einem Anlaufbund versehen sind.

## Claims

1. A bearing shell, in particular a lower bearing shell for radial plain bearings in internal combustion engines, the external contour of which is in the shape of a circular arc of the radius rₐ and the bearing wall thickness of which increases from the apex in the peripheral direction towards the separating surfaces, characterised in that the internal contour is in the shape of half an ellipse with the semi-axes aᵢ and bᵢ. wherein the long semi-axis aᵢ passes through the apex (19) of the lower bearing shell (9).

2. A bearing shell according to claim 1 characterised in that the backing material (22) of the bearing shell (9) is of a constant thickness over the periphery and the bearing material (23) applied to the backing material (22) is of different thicknesses.

3. A bearing shell according to claim 1 or claim 2 characterised in that, with bearing outside diameters of 20 mm to 1000 mm, the difference in the wall thickness in the apex (19) and in the region of the separating surfaces (11) is up to 0.1 mm.

4. A bearing arrangement comprising a radial plain bearing which is fitted in a bearing body provided with a bearing cap, having upper and lower bearing shells for bearing assemblies in internal combustion engines, in particular for supporting crankshafts, in which bearing loadings occur which vary in respect of size and direction in a given cycle, wherein the wall thickness of the lower bearing shell increases from the apex along the periphery towards the separating surfaces and the internal contour of the lower bearing shell is in the shape of a circular arc of the radius rᵢ, characterised in that the external contour of the lower bearing shell (9) is in the shape of half an ellipse with the semi-axes aₐ and bₐ, wherein the short semi-axis bₐ passes through the apex of the lower bearing shell (9).

5. A bearing arrangement according to claim 4 characterised in that the centre points of the outside diameter of the upper bearing shell (8) and the inside diameter of the lower bearing shell (9) coincide.

6. A bearing arrangement according to one of claims 4 and 5 characterised in that the bearing wall thickness in the region of the separating surfaces (11) is equal in the case of upper and lower bearing shells (8, 9).

7. A bearing arrangement according to one of claims 4 to 6 characterised in that superimposed on the bearing bore (13) is a lemon bore so that the wall thickness in the apex (18) of the upper bearing shell (8) is thicker than in the region of the separating surfaces (11).

8. A bearing arrangement according to one of claims 4 to 7 characterised in that the bearing shells (8, 9) are provided with a contact shoulder.

## Revendications

1. Coussinet de palier, notamment coussinet inférieur de palier pour paliers lisses radiaux dans des moteurs à combustion interne, dont le contour extérieur revêt la forme d'un arc de cercle présentant le rayon rₐ, et dont l'épaisseur de paroi augmente dans le sens périphérique à partir du point zénithal, en direction des surfaces de séparation, caractérisé par le fait
que le contour intérieur revêt la forme d'une demi-ellipse présentant les demi-axes aᵢ et bᵢ, le demi-axe long aᵢ passant par le point zénithal (19) du coussinet inférieur (9) de palier.

2. Coussinet de palier selon la revendication 1, caractérisé par le fait que le matériau d'appui (22) du coussinet de palier (9) possède une épaisseur constante sur le pourtour et le matériau de portée (23), mis en place sur ledit matériau d'appui (22), possède des épaisseurs différentes.

3. Coussinet de palier selon la revendication 1 ou 2, caractérisé par le fait que, en présence de diamètres extérieurs du palier compris entre 20 mm et 1 000 mm, la différence d'épaisseur de paroi, au point zénithal (19) et dans la région des surfaces de séparation (11), mesure jusqu'à 0,1 mm.

4. Dispositif de portée constitué d'un palier lisse radial intégré dans un corps de palier muni d'un chapeau de palier et comprenant des coussinets supérieur et inférieur de palier, pour systèmes de montage dans des moteurs à combustion interne, notamment en vue du montage d'arbres de manivelle dans lesquels surviennent des contraintes de portée dont la grandeur et la direction varient en un cycle déterminé, l'épaisseur de paroi du coussinet inférieur de palier croissant à partir du point zénithal, le long du pourtour, en direction des surfaces de séparation, et le contour intérieur dudit coussinet inférieur de palier revêtant la forme d'un arc de cercle présentant le rayon rᵢ, caractérisé par le fait
que le contour extérieur du coussinet inférieur (9) de palier revêt la forme d'une demi-ellipse présentant les demi-axes aₐ et bₐ, le demi-axe court bₐ passant par le point zénithal (19) dudit coussinet inférieur (9) de palier.

5. Dispositif de portée selon la revendication 4, caractérisé par le fait que les centres du diamètre extérieur du coussinet supérieur (8) de palier, et du diamètre intérieur du coussinet inférieur (9) de palier, coïncident mutuellement.

6. Dispositif de portée selon l'une des revendications 4 ou 5, caractérisé par le fait que l'épaisseur de paroi, dans la région des surfaces de séparation (11), est identique sur les coussinets supérieur et inférieur (8, 9) de palier.

7. Dispositif de portée selon l'une des revendications 4 à 6, caractérisé par le fait qu'un alésage en forme de citron est superposé à l'alésage de portée (13), de sorte que l'épaisseur de paroi est plus grande, au point zénithal (18) du coussinet supérieur (8) de palier, que dans la région des surfaces de séparation (11).

8. Dispositif de portée selon l'une des revendications 4 à 7, caractérisé par le fait que les coussinets de palier (8, 9) sont pourvus d'un collet d'attaque.
